# EUROPÄISCHE PATENTSCHRIFT

(11) **EP 2 071 935 B1**
(45) Veröffentlichungstag und Bekanntmachung des Hinweises auf die Patenterteilung: **25.08.2010**
(21) Anmeldenummer: 08021805.0
(22) Anmeldetag: 16.12.2008
(51) Int. Cl.: A01F 12/44

(54) **Mähdrescher mit Reinigungsgebläse**
Combine harvester with cleaning fan
Moissonneuse-batteuse dotée d'un ventilateur de nettoyage

(30) Priorität: 20.12.2007 DE 102007062531
(43) Veröffentlichungstag der Anmeldung: 24.06.2009
(73) Patentinhaber: CLAAS Selbstfahrende Erntemaschinen GmbH, 33426 Harsewinkel (DE)
(72) Erfinder: Claes, Ulrich, 49201 Dissen (DE)
(74) Vertreter: Heuer, Wilhelm

(56) Entgegenhaltungen:
- EP-A- 0 302 210
- EP-A- 0 683 970
- EP-A- 1 733 610

## Beschreibung

Die vorliegende Erfindung betrifft einen Mähdrescher mit einem Reinigungsgebläse.

Reinigungsgebläse für Mähdrescher, wie zum Beispiel aus EP 1 407 656 A1 bekannt, umfassen meist eine oder mehrere auf einer gemeinsamen Welle angeordnete Radialgebläse mit in einem Gebläsegehäuse rotierenden Schaufelrädern, die Luft aus einer achsparallelen Richtung ansaugen und in einen tangential zur Schaufelbewegung ausgerichteten Luftkanal ausstoßen.

Die Anordnung eines solchen Reinigungsgebläses in einem Mähdrescher ist in DE 10 2005 027 726 A1 gezeigt. Der Luftkanal bläst schräg von unten gegen Siebe, die für darauf geleitete Getreidekörner durchlässig sind, während leichtere Erntegutbestandteile, die zusammen mit dem Korn auf die Siebe geführt werden, von dem Luftstrom des Reinigungsgebläses fort getragen und einer Überkehr zugeführt oder aus dem Mähdrescher ausgeworfen werden.

Ein Problem dieser bekannten Anordnung ist, dass der Luftstrom die Siebe hauptsächlich in ihrem vorderen, dem Gebläse zugewandten Bereich passiert. So bildet der Luftstrom im vorderen Bereich der Siebe gewissermaßen ein Luftkissen aus, das leichte Nichtkornbestandteile trägt, so dass bereits eine geringe Strömungsgeschwindigkeit ausreicht, um diese Nichtkornbestandteile in Richtung einer Überkehr oder einer Auswurföffnung am rückwärtigen Ende der Siebe fort zu tragen. In einem rückwärtigen Bereich der Siebe hingegen ist die Luftkissenwirkung schwächer oder fehlt, so dass dort eine hohe Strömungsgeschwindigkeit erforderlich ist, um die Nichtkornbestandteile wirksam weiter zu befördern. Um diese hohe Strömungsgeschwindigkeit zu erzeugen, ist eine beträchtliche Gebläseleistung erforderlich.

Aus DE 29 22 607 A1 ist ein Reinigungsgebläse für einen Mähdrescher bekannt, bei dem verstellbare Leitbleche im Luftkanal es erlauben, die Richtung eines gegen die Siebe gelenkten Luftstroms zu steuern. Solange diese Leitbleche parallel zur Ober- und Unterseite des Luftkanals stehen, beeinflussen sie die Richtung des Luftstroms nicht, und die Siebe werden überwiegend in ihrem vorderen Bereich durchströmt. Zwar ist es durch Verstellen der Leitbleche möglich, den Luftstrom unter einem kleineren Winkel gegen die Siebe zu führen, doch führt dies gleichzeitig zur Abschwächung eines oberhalb des Siebs verlaufenden Luftstroms. Außerdem besteht die Gefahr, dass im Luftstrom mitgeführte Teile wie etwa Stroh und Lieschblätter an den Leitblechen hängen bleiben und im Laufe der Zeit den Luftkanal verstopfen.

EP 0 302 210 offenbart einen Mähdrescher nach dem Oberbegriff des Anspruchs 1. Eine Reinigungsvorrichtung dieses Mähdreschers umfasst zwei in Fahrtrichtung des Mähdreschers hintereinander angeordnete Gebläse, von denen die hintere angeordnet ist, um eine Reinigungseinheit anzuströmen. Ein Luftkanal mit konvexer Unterseite führt einen vom vorderen Gebläse erzeugten Luftstrom um das Gehäuse des hinteren Gebläses herum in einen Zwischenraum zwischen der Reinigungseinheit und einem darüber angeordneten Bandförderer.

Auch aus EP 0 683 970 ist ein Mähdrescher nach dem Oberbegriff des Anspruchs 1 bekannt. Ein Luftkanal mit konvexer Unterseite dient hier dazu, einen Teil des Luftstroms des Gebläses von einem Siebe anströmenden Hauptstrom abzuzweigen und oberhalb der Siebe vorbeizuführen. Der Hauptstrom ist in einem Luftkanal mit ebener, schräg ansteigender Unterseite gegen die Siebe geführt.

Eine Aufgabe der vorliegenden Erfindung ist, einen Mähdrescher mit einem Reinigungsgebläse anzugeben, bei dem ein Großteil des Luftstroms unter ein Sieb geführt werden kann, ohne dass deswegen der Luftkanal selbst so tief liegen muss, dass die Gefahr des Eindringens von Korn in den Luftkanal besteht. Eine andere Aufgabe ist, einen Mähdrescher anzugeben, bei dem eine gute Abscheideeffektivität über die gesamte Sieblänge hinweg aufrecht erhalten werden kann. Eine weitere Aufgabe ist, einen Mähdrescher zu schaffen, der eine gute Abscheideleistung erreicht, ohne übermäßige Anforderungen an die Gebläseleistung zu stellen.

Die Aufgaben werden gelöst durch einen Mähdrescher mit den Merkmalen des Anspruchs 1. Wenn der von den Luftschaufeln angetriebene Luftstrom über die konvex gekrümmte Innenfläche streicht, so folgt aufgrund des Coandä-Effekts die Luftströmung der Kontur der Innenfläche, so dass am Ende des Luftkanals ein sich in tangentialer Verlängerung der Innenfläche ausbreitender Luftstrom erhalten wird.

Um diesen Effekt effizient herbeizuführen, ist es wünschenswert, dass wenigstens ein gehäusenaher Teil der Wand einer Eintrittsöffnung des Luftkanals zugewandt orientiert ist. Indem dieser Teil der Wand vom Luftstrom des Gebläses angeströmt wird, lenkt er diesen bei gleichzeitiger Staubildung ab, so dass in einem der Wand benachbarten Bereich des Kanalquerschnitts ein beschleunigter Luftstrom erhalten wird.

Um diesen beschleunigten Luftstrom wirksam in eine mit einem geraden Luftkanal nicht erreichbare Richtung abzulenken, ist wenigstens ein gehäuseferner Teil der Wand vorzugsweise von der Lufteintrittsöffnung des Luftkanals abgewandt.

Mit Hilfe der konvexen Wand wird eine Umlenkung des Luftstroms erreicht, ohne dass hierfür Luftleitbleche entlang des Kanals benötigt werden. Um auszuschließen, dass in dem Strom mitgeführte Teile in dem Luftkanal hängen bleiben, kann dieser daher zweckmäßigerweise gänzlich frei von auf zwei Seiten umströmbaren Luftleitelementen gehalten werden.

An seiner der Wand mit konvex gekrümmter Innenfläche gegenüberliegenden Seite kann der Luftkanal durch eine Wand mit konkav gekrümmter Innenfläche begrenzt sein, so dass der Querschnitt des Luftkanals sich über dessen Länge hinweg nicht wesentlich ändert und der Kanal eine laminare Strömung ohne Geschwindigkeitsverlust führen kann.

Die obere Wand kann auch gerade ausgeführt sein; dies ist in der Herstellung einfacher.

Der unterhalb der Kante passierende Strom, der vorgesehen ist, um stromabwärts von der Kante das Sieb zu passieren und auf diesem eine Luftkissenwirkung zu entfalten, ist vorzugsweise stärker als der oberhalb der Kante passierende Strom, der zum Forttragen von durch das Luftkissen angehobenen Partikeln dient.

Um einen großen Teil des Luftstroms unter das Sieb zu lenken, liegt ein gehäuseferner Teil der Wand vorzugsweise unterhalb einer durch das Sieb definierten Ebene, und eine Tangente dieses gehäusefernen Teils und die Ebene laufen vom Gebläsegehäuse fort auseinander.

Ein Boden des Siebgehäuses und das Sieb laufen vorzugsweise vom Gebläse fort aufeinander zu, um den unterhalb der Kante des Siebes passierenden Luftstrom über die gesamte Fläche des Siebes verteilt durch dieses hindurch zu führen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch einen Mähdrescher gemäß der vor- liegenden Erfindung;
- Fig. 2: ein vergrößertes Detail des Mäh- dreschers aus Fig. 1; und
- Fig. 3: einen axialen Schnitt durch das Gebläse des Mähdreschers.

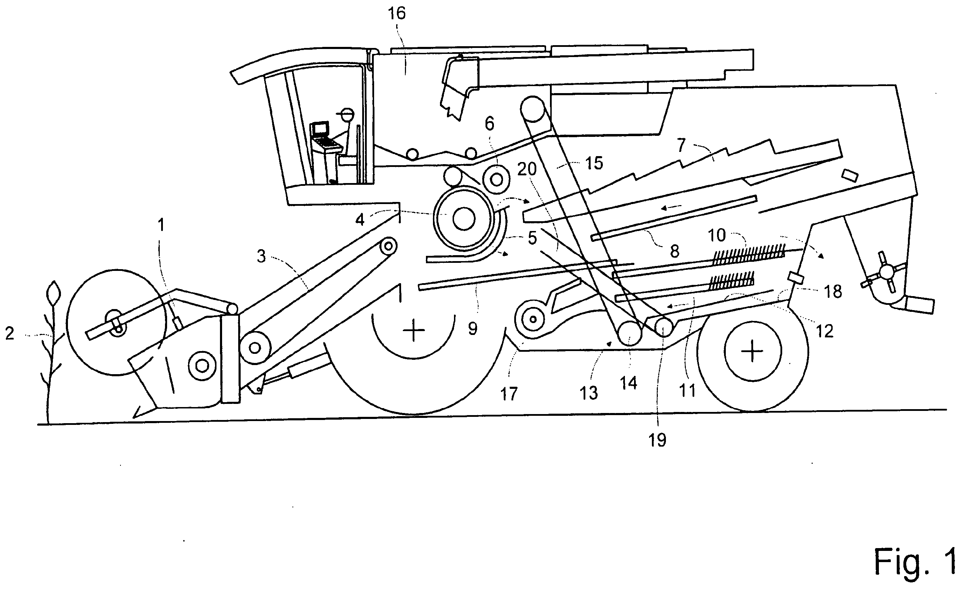

Der in Fig. 1 schematisch gezeigte Mähdrescher trägt an seiner Vorderseite ein austauschbares Schneidwerk wie etwa ein Getreideschneidwerk 1 zum Schneiden und Sammeln von Erntegut 2. Ein Schrägförderer 3 befördert das geschnittene Erntegut zu einer mit quer zur Fahrtrichtung des Mähdreschers ausgerichteter Achse angeordneten Dreschtrommel 4 und einem Dreschkorb 5. Aus dem Erntegut ausgedroschenes Korn passiert den Dreschkorb 5. Eine Wendetrommel 6 dient zur Weiterbeförderung des gedroschenen Ernteguts zu einer Abscheidereinrichtung 7, hier dargestellt als ein Strohschüttler, die restliches Korn sowie kleinteiliges Nichtkornmaterial aus dem Strom des gedroschenen Ernteguts isoliert. Anstelle des Strohschüttlers kann als Abscheidereinrichtung 7 auch ein Axialabscheider, z.B. mit einer oder zwei sich in Längsrichtung des Mähdreschers erstreckenden Trommeln, umgeben von Abscheidekörben, vorgesehen sein.

Erntegut, welches durch Roste der Abscheidereinrichtung 7 hindurch gefallen ist, gelangt auf einen sich unter der Abscheidereinrichtung 7 erstreckenden, nach vorn abschüssigen Rücklaufboden 8 und über diesen zu einem Vorbereitungsboden 9, auf dem es mit unmittelbar an der Dreschtrommel 4 abgeschiedenem und durch den Dreschkorb 5 hindurch getretenen Korn zusammengeführt wird. Der dadurch erhaltene Gutstrom, der reich an Korn ist, aber auch fein zerkleinerte Nichtkornbestandteile enthält, wird weiterbefördert auf ein Obersieb 10.

Das Obersieb 10 und ein darunter liegendes, zu dem Obersieb 10 in etwa paralleles Untersieb 11 sind unten und seitlich von einem Siebgehäuse umschlossen. Der in Fig. 1 gezeigte Boden 12 des Siebgehäuses ist von einem an einen hinteren Rand des Untersiebs 11 angrenzenden Rand aus nach vorn zu einer Schneckenmulde 13 hin abschüssig, in welcher eine Förderschnecke 14 rotiert. Die Förderschnecke 14 und ein daran angeschlossener Kornelevator 15 befördern von Nichtkornbestandteilen gereinigtes Korn, das sich auf dem Boden 12 sammelt, in einen Korntank 16 hinter der Führerkanzel des Mähdreschers.

Ein Radialgebläse 17 ist vor den Sieben 10, 11 angeordnet, um einen Luftstrom zu liefern, der teils durch die Siebe 10, 11 hindurch, teils über sie hinweg streicht, um leichte Bestandteile des auf den Sieben 10, 11 befindlichen Ernteguts anzuheben und fort zu tragen. Bestandteile, die von dem Luftstrom über eine hintere Kante des Obersiebs 10 hinweg getragen werden, werden direkt aus dem Mähdrescher ausgeworfen, wie durch einen Pfeil in Fig. 1 angedeutet. Bei Bestandteilen, die durch das Obersieb 10 hindurch auf das Untersieb 11 gelangt sind und dort vom Luftstrom fort getragen werden, handelt es sich häufig um unvollständig ausgedroschene Ährenbruchstücke. Diese fallen über die hintere Kante des Untersiebs 11 hinweg auf einen Überkehrboden 18, sammeln sich an dessen unterem Rand an einer zweiten Schnecke 19, und gelangen über diese und einen Elevator 20 zurück zur Dreschtrommel 4.

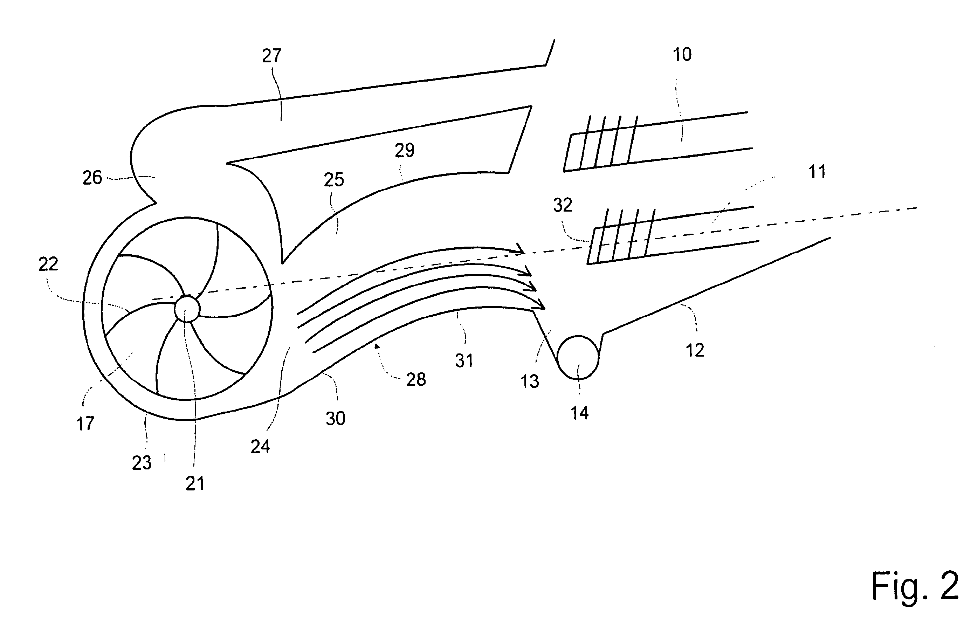

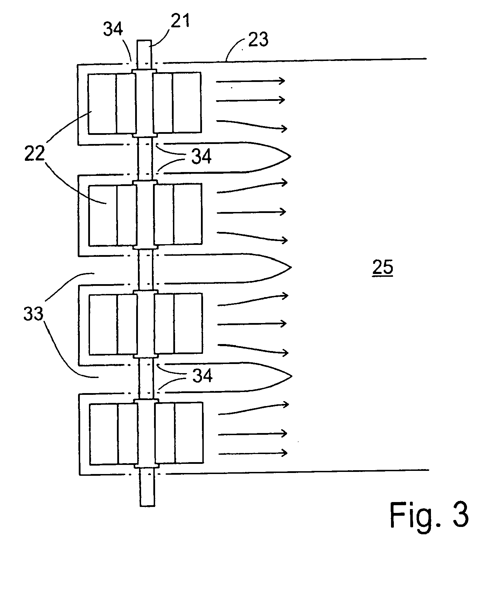

Fig. 2 zeigt in einer detaillierteren Darstellung die Siebe 10, 11 und das ihnen zugeordnete Gebläse 17. Auf einer quer zur Ebene der Figur orientierten Welle 21 des Gebläses 17 ist ein Schaufelrad 22, umgeben von einem Gebläsegehäuse 23, zu erkennen. Wie in Fig. 3 in einem axialen Schnitt durch das Gebläse 17 gezeigt, können mehrere Schaufelräder 22 axial gestaffelt auf der Welle 21 angeordnet sein, deren Drehung Frischluft in axialer Richtung, von den Außenseiten des Mähdreschers her oder aus Zwischenräumen 33 zwischen den Schaufelrädern 22, durch Einlassöffnungen 34 des Gebläsegehäuses 23 ansaugt und eine über die Breite des Mähdreschers hinweg gleichmäßig starke Luftströmung erzeugt.

Das Gebläsegehäuse 23 hat in der hier gezeigten Ausgestaltung an seinem Umfang zwei Öffnungen, eine im Wesentlichen entgegen der Fahrtrichtung des Mähdreschers orientierte Eintrittsöffnung 24 eines Hauptluftkanals 25 und, in etwa am Scheitel des Gebläsegehäuses 23, eine Eintrittsöffnung 26 eines Nebenluftkanals 27. Der Hauptluftkanal 25 hat eine untere Wand 28 mit konvex gekrümmter Oberseite. Eine obere Wand 29 des Hauptluftkanals 25 kann wie in Fig. 2 gezeigt komplementär zu der unteren Wand 28 konkav gekrümmt oder gerade sein. Ein dem Schaufelrad 22 benachbarter Bereich 30 der unteren Wand 28 ist dem Schaufelrad 22 zugewandt, so dass der vom Schaufelrad 22 in den Kanal 25 hinein getriebene Luftstrom zumindest in einem unteren Bereich des Kanalquerschnitts vom Wandbereich 30 nach oben abgelenkt wird. Die dadurch erhaltene in der Nähe der unteren Wand 28 beschleunigte Luftströmung folgt dem Verlauf der unteren Wand 28 auch entlang eines stromabwärtigen, vom Schaufelrad 22 abgewandten Bereichs 31 der Wand 28. In diesem Bereich 31 entfernt sich, in Flussrichtung gesehen, die Wand 28 von einer durch das im Wesentlichen planare Untersieb 11 definierten, in der Fig. 2 als strichpunktierte Linie dargestellten Ebene. So wird an einer Austrittsöffnung des Kanals 25, in der dieser in das Siebgehäuse übergeht, ein im Mittel leicht abwärts gerichteter Luftstrom erhalten, der zu einem bei weitem überwiegenden Teil unterhalb einer angeströmten Vorderkante 32 des Untersiebs 11 vorbei streicht. Die Schneckenmulde 13 mit der darin rotierenden Förderschnecke 14 beeinflusst die Luftströmung im Betrieb nur unwesentlich, da sie meist mit Korn gefüllt ist.

Die Krümmung der Wand 28 ermöglicht es so, einen Grossteil des durch den Hauptluftkanal 25 fließenden Luftstroms unter das Untersieb 11 zu leiten, ohne dass deswegen der Hauptluftkanal 25 selbst so tief liegen muss, dass die Gefahr des Eindringens von Korn in den Hauptluftkanal 25 besteht. Diese Gefahr ist weiter verringert durch den nach hinten abschüssigen Verlauf des stromabwärtigen Bereichs 31 der Wand 28.

Indem der Abstand zwischen Untersieb 11 und Boden 12 zum Heck des Mähdreschers hin zunehmend enger wird, wird der Teil des Hauptkanalluftstroms, der unterhalb der Vorderkante 32 passiert ist, sukzessive durch das Untersieb 11 hindurch getrieben. Die über die gesamte Fläche des Untersiebs 11 gleichmäßig verteilt hindurch tretende Luft hält das Korn auf dem Untersieb 11 in Bewegung, so dass dieses effizient und schnell gesiebt wird, und es hält leichte Bestandteile in der Schwebe, so dass diese auch von einer schwachen über dem Untersieb 11 entlang streifenden Luftströmung effizient in die Überkehr befördert werden können.

Aufgrund der parallelen Anordnung von Ober- und Untersieb 10, 11 wird auch das Obersieb 10 großflächig verteilt von Luft durchströmt.

In der Ausgestaltung der Fig. 2 streicht ein Luftstrom vom Nebenluftkanal 27 über dem Obersieb 10 her und trägt von der hindurch tretenden Luft zum Schweben gebrachte Teilchen mit sich zu einer heckseitigen Auswurföffnung. Alternativ könnte auch durch eine geeignete Formgebung des Siebgehäuses erzwungen werden, dass die durch das Obersieb 10 aufsteigende Luft über dem Obersieb 10 nach hinten abgelenkt wird, um so die schwebenden Teilchen fort zu tragen.

### Bezugszeichen

- 1.: Getreideschneidwerk
- 2.: Erntegut
- 3.: Schrägförderer
- 4.: Dreschtrommel
- 5.: Dreschkorb
- 6.: Wendetrommel
- 7.: Strohschüttler
- 8.: Rücklaufboden
- 9.: Vorbereitungsboden
- 10.: Obersieb
- 11.: Untersieb
- 12.: Boden des Siebgehäuses
- 13.: Schneckenmulde
- 14.: Förderschnecke
- 15.: Kornelevator
- 16.: Korntank
- 17.: Radialgebläse
- 18.: Überkehrboden
- 19.: Schnecke
- 20.: Elevator
- 21.: Welle
- 22.: Schaufelrad
- 23.: Gebläsegehäuse
- 24.: Eintrittsöffnung
- 25.: Hauptluftkanal
- 26.: Eintrittsöffnung
- 27.: Nebenluftkanal
- 28.: untere Wand von 25
- 29.: obere Wand von 25
- 30.: Bereich
- 31.: Bereich
- 32.: Vorderkante
- 33.: Zwischenraum
- 34.: Einlassöffnung

## Patentansprüche

1. Mähdrescher mit einem Reinigungsgebläse, das wenigstens ein in einem Gebläsegehäuse (23) drehbares Schaufelrad (22) und einen von dem Gebläsegehäuse (23) ausgehenden Luftkanal (25) umfasst, der durch eine Wand (28) mit konvex gekrümmter Innenfläche begrenzt ist, indem die konvex gekrümmte Wand (28) eine Unterseite des Luftkanals (25) bildet, **dadurch gekennzeichnet, dass** der Luftkanal (25) in ein Siebgehäuse mündet und dass eine dem Luftkanal (25) zugewandte Kante (32) wenigstens eines in dem Siebgehäuse angeordneten Siebs (11) einen durch den Luftkanal (25) verlaufenden Luftstrom in einen oberhalb der Kante (32) passierenden Strom und einen unterhalb der Kante passierenden Strom aufteilt.

2. Mähdrescher mit einem Reinigungsgebläse nach Anspruch 1, **dadurch gekennzeichnet, dass** wenigstens ein gehäusenaher Teil (30) der Wand (28) einer Lufteintrittsöffnung (24) des Luftkanals (25) zugewandt orientiert ist.

3. Mähdrescher mit einem Reinigungsgebläse nach Anspruch 1 oder 2, **dadurch gekennzeichnet, dass** wenigstens ein gehäuseferner Teil (31) der Wand (28) von einer Lufteintrittsöffnung (24) des Luftkanals (25) abgewandt orientiert ist.

4. Mähdrescher mit einem Reinigungsgebläse nach einem der vorhergehenden Ansprüche, **dadurch gekennzeichnet, dass** der Luftkanal (25) frei von auf zwei Seiten umströmbaren Luftleitelementen ist.

5. Mähdrescher mit einem Reinigungsgebläse nach einem der vorhergehenden Ansprüche, **dadurch gekennzeichnet, dass** der Luftkanal (25) an seiner der Wand (28) mit konvex gekrümmter Innenfläche gegenüber liegenden Seite durch eine Wand (29) mit konkav gekrümmter Innenfläche begrenzt ist.

6. Mähdrescher mit einem Reinigungsgebläse nach einem der vorhergehenden Ansprüche, **dadurch gekennzeichnet, dass** der Luftkanal (25) an seiner der Wand (28) mit konvex gekrümmter Innenfläche gegenüber liegenden Seite durch eine gerade Wand begrenzt ist.

7. Mähdrescher nach einem der vorhergehenden Ansprüche, **dadurch gekennzeichnet, dass** der unterhalb der Kante (32) passierende Strom stärker als der oberhalb der Kante passierende Strom ist.

8. Mähdrescher nach einem der vorhergehenden Ansprüche, **dadurch gekennzeichnet, dass** ein gehäuseferner Teil (31) der Wand (28) unterhalb einer durch das Sieb (11) definierten Ebene liegt und dass eine Tangente des gehäusefernen Teils (31) und die Ebene vom Gebläsegehäuse (17) fort auseinanderlaufen.

9. Mähdrescher nach einem der Ansprüche 6 bis 8, **dadurch gekennzeichnet, dass** das ein Boden (12) des Siebgehäuses und das Sieb (11) vom Gebläse (17) fort aufeinander zulaufen.

## Claims

1. Combine harvester having a cleaning blower which comprises at least one impeller (22) able to be rotated in a blower casing (23), and an air duct (25) which begins at the blower casing (23) and is bounded by a wall (28) having a convexly curved inner face, the convexly curved wall (28) forming a bottom side of the air duct (25), **characterised in that** the air duct (25) opens into a screen housing and **in that** an edge (32), adjacent the air duct (25), of at least one screen (11) arranged in the screen housing divides a flow of air travelling through the air duct (25) into a flow which passes above the edge (32) and a flow which passes below the edge.

2. Combine harvester having a cleaning blower, according to claim 1, **characterised in that** at least a portion (30) of the wall (28) which is close to the casing is oriented to face towards an air inlet opening (24) of the air duct (25).

3. Combine harvester having a cleaning blower, according to claim 1 or 2, **characterised in that** at least a portion (31) of the wall (28) which is distant from the casing is oriented to face away from an air inlet opening (24) of the air duct (25).

4. Combine harvester having a cleaning blower, according to one of the foregoing claims, **characterised in that** the air duct (25) is free of air-directing members around which air is able to flow on two sides.

5. Combine harvester having a cleaning blower, according to one of the foregoing claims, **characterised in that** the air duct (25) is bounded by a wall (29) having a concavely curved inner face on its side opposite from the wall (28) having a convexly curved inside face.

6. Combine harvester having a cleaning blower, according to one of the foregoing claims, **characterised in that** the air duct (25) is bounded by a straight wall on its side opposite from the wall (28) having a convexly curved inside face.

7. Combine harvester according to one of the foregoing claims, **characterised in that** the flow which passes below the edge (32) is stronger than the flow which passes above the edge.

8. Combine harvester according to one of the foregoing claims, **characterised in that** a portion (31) of the wall (28) which is distant from the casing lies below a plane defined by the screen (11) and **in that** a tangent to the portion (31) distant from the casing and the said plane diverge in the direction leading away from the blower casing (17).

9. Combine harvester according to one of claims 6 to 8, **characterised in that** a floor (12) of the screen housing and the screen (11) converge in the direction leading away from the blower (17).

## Revendications

1. Moissonneuse-batteuse ayant une soufflante de nettoyage qui comprend au moins un rouet (22) que l'on peut faire tourner dans une enveloppe de soufflante (23) et une conduite à air (25), commençant au niveau de l'enveloppe de soufflante (23), qui est limitée par une paroi (28) ayant une face intérieure convexement arrondie, la paroi convexement arrondie (28) formant un côté inférieur de la conduite à air (25), **caractérisée en ce que** la conduite à air (25) débouche sur un logement de tamis et **en ce qu'**un bord (32), adjacent à la conduite à air (25), d'au moins un tamis (11) arrangé dans le logement de tamis divise un flux d'air circulant à travers la conduite à air (25) en un flux qui passe au-dessus du bord (32) et un flux qui passe au-dessous du bord.

2. Moissonneuse-batteuse ayant une soufflante de nettoyage, selon la revendication 1, **caractérisée en ce qu'**au moins une portion (30) de la paroi (28) qui est près de l'enveloppe est tournée vers une ouverture d'entrée d'air (24) de la conduite à air (25).

3. Moissonneuse-batteuse ayant une soufflante de nettoyage, selon la revendication 1 ou 2, **caractérisée en ce qu'**au moins une portion (31) de la paroi (28) qui est loin de l'enveloppe est détournée d'une ouverture d'entrée d'air (24) de la conduite à air (25).

4. Moissonneuse-batteuse ayant une soufflante de nettoyage, selon l'une des revendications précédentes, **caractérisée en ce que** la conduite à air (25) est exempte de membres directeurs d'air autour desquels l'air peut s'écouler sur deux côtés.

5. Moissonneuse-batteuse ayant une soufflante de nettoyage, selon l'une des revendications précédentes, **caractérisée en ce que** la conduite à air (25) est limitée par une paroi (29) ayant une face intérieure concavement arrondie sur son côté opposé à la paroi (28) ayant une face intérieure convexement arrondie.

6. Moissonneuse-batteuse ayant une soufflante de nettoyage, selon l'une des revendications précédentes, **caractérisée en ce que** la conduite à air (25) est limitée par une paroi droite sur son côté opposé à la paroi (28) ayant une face intérieure convexement arrondie.

7. Moissonneuse-batteuse selon l'une des revendications précédentes, **caractérisée en ce que** le flux qui passe au-dessous du bord (32) est plus fort que le flux qui passe au-dessus du bord.

8. Moissonneuse-batteuse selon l'une des revendications précédentes, **caractérisée en ce qu'**une portion (31) de la paroi (28) qui est loin de l'enveloppe se trouve au-dessous d'un plan défini par le tamis (11) et **en ce qu'**une tangente à la portion (31) loin de l'enveloppe et ledit plan diverge dans la direction s'éloignant de l'enveloppe de soufflante (17).

9. Moissonneuse-batteuse selon l'une des revendications 6 à 8, **caractérisée en ce qu'**un plancher (12) du logement de tamis et le tamis (11) convergent dans la direction s'éloignant de la soufflante (17).
